(19) Europäisches Patentamt
European Patent Office
Office européen des brevets

(11) **EP 3 759 147 B1**

(12) **EUROPEAN PATENT SPECIFICATION**

(45) Date of publication and mention
of the grant of the patent:
**01.10.2025 Bulletin 2025/40**

(21) Application number: **19706727.5**

(22) Date of filing: **01.03.2019**

(51) International Patent Classification (IPC):
**C08L 23/08** (2025.01)  **C08F 2/00** (2006.01)
**C08F 210/16** (2006.01)

(52) Cooperative Patent Classification (CPC):
(C-Sets available)
**C08F 2/001; C08L 23/0815;** C08F 2/38;
C08F 210/16; C08L 23/04; C08L 2203/16;
C08L 2205/03; C08L 2308/00; C08L 2314/06
(Cont.)

(86) International application number:
**PCT/EP2019/055210**

(87) International publication number:
**WO 2019/166652 (06.09.2019 Gazette 2019/36)**

(54) **OLEFIN POLYMERISATION PROCESS**

OLEFINEN-POLYMERISATIONSVERFAHREN

PROCÉDÉ DE POLYMÉRISATION DES OLÉFINES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **02.03.2018 EP 18159824**

(43) Date of publication of application:
**06.01.2021 Bulletin 2021/01**

(73) Proprietor: **Borealis GmbH
1020 Vienna (AT)**

(72) Inventors:
• **GALGALI, Girish Suresh
4021 Linz (AT)**
• **JEREMIC, Dusan
4021 Linz (AT)**
• **ALBRECHT, Andreas
4021 Linz (AT)**

(74) Representative: **Dehns
10 Old Bailey
London EC4M 7NG (GB)**

(56) References cited:
**EP-A1- 2 883 885      EP-A1- 3 257 895
WO-A1-2016/083208**

Remarks:
The file contains technical information submitted
after the application was filed and not included in this
specification

(52) Cooperative Patent Classification (CPC): (Cont.)

   C-Sets
**C08F 210/16, C08F 2/001;**
**C08F 210/16, C08F 4/65916;**

**C08F 210/16, C08F 4/65925;**
**C08L 23/0815, C08L 23/0815;**
C08F 210/16, C08F 210/08, C08F 210/14,
C08F 2500/05, C08F 2500/12, C08F 2500/26;
C08L 23/04, C08F 2/001

## Description

The present invention relates to a process for preparing a multimodal ethylene terpolymer and an ethylene terpolymer which can be obtained in such as a process. The invention also relates to an article comprising the ethylene terpolymer, such as a film.

## Background to the invention

It is known that a bimodal polymer offers certain advantages over a unimodal polymer in particular with regard to its processability. Bimodal polymers tend to have broad molecular weight distributions which allow processing conditions to be more rigorous than those typically employed when unimodal polymers are employed.

Unfortunately, the increase in processability is associated with a reduction in optical properties in films formed from the polymer. Moreover, the increase in density required to achieve high stiffness in a bimodal polymer causes a reduction in optical properties and some mechanical properties such as impact.

Thus, the problem faced by the film manufacturer is that by trying to improve one property, another equally important property tends to be detrimentally affected. Many inventors have therefore sought to maximise the film properties they obtain by mixing components. For example, the addition of low density polyethylene (LDPE) gives rise to films having excellent optical properties (low haze, high gloss) which can be processed at low temperatures and pressures, however, films made from LDPE have low stiffness.

Optical properties have been improved by using linear low density polyethylenes produced using metallocene (mLLDPE's), but at the expense of processability. Furthermore, the bubble stability during film blowing is compromised.

Various blends of these materials have therefore been proposed in the art to try to maximise film performance by combining the advantageous properties of certain polymers. Thus for example, LDPE and mLLDPE have been blended to form films. However when mixtures of polymers are employed, there is a potential issue of polymer compatibility, e.g. whether a homogeneous mixture will be formed between the components.

There is thus a need for a polymer that is homogeneous and can provide the necessary balance of properties without having to automatically resort to mechanical polymer blends. Homogeneous polymers are readily processable and offer desirable properties such as good optical properties.

The object of the present invention is to provide polymers with an unexpected property combination which offer a desirable alternative for film applications in particular. The inventors sought a polymer with low gels. Low gel content in the polymer is advantageous as the polymer is more homogeneous and more readily processed. Lower gels also means fewer defects, lower extractables and hence generally improved mechanical and optical properties.

The present inventors have surprisingly found that a three-stage polymerisation process which produces a high-MFR prepolymerised component (e.g. with an $MFR_2$ of 30-80 g/10 min) of similar MFR to the first component results in an ethylene terpolymers with unexpectedly low gel counts. These polymers are therefore very homogeneous and are exceptionally processable.

In particular, good results have been achieved when the MFR of the prepolymerised component is similar to the MFR of the component produced in the first polymerisation stage in the context of an ethylene terpolymer. A further benefit of the present invention is that these terpolymers can be obtained without the need for TEAL in the GPR phase.

WO 2016/083208 and WO 2016/083209 relate to films with beneficial hot tack properties. The copolymers described therein have a loop component with a low MFR.

EP3015502 relates to polyethylene films with large stretch ratios and high film forming rate, achieved by control of the molecular weights of the polyethylene compositions.

## Summary of the invention

In a first aspect, the present invention provides a process for preparing a multimodal ethylene terpolymer comprising the steps of:

(a) pre-polymerizing ethylene and at least one C4-C12 comonomer to produce a copolymer component ($i_o$) having a $MFR_2$ in the range of 30 to 80 g/10min;
(b) in the presence of component ($i_o$), copolymerizing ethylene with a C4-C12 comonomer to produce component (i) wherein the $MFR_2$ of component (i) is in the range of 30 to 80 g/10min;
(c) in the presence of component (i), polymerizing ethylene and at least one C4-C12 comonomer to produce component (ii);

wherein hydrogen is fed during one or more of the polymerization steps;
wherein the $MFR_2$ ratio of (i)/($i_o$) is in the range of 0.5 to 2.5;

wherein the $MFR_2$ of the terpolymer is 1.5 to 10 g/10min, and wherein the density of the terpolymer is 905 to 940 kg/m$^3$;
wherein component ($i_o$) forms 0.5 to 5.0 wt% of the terpolymer,
component (i) (which incorporates component $i_o$) forms 30 to 70 wt% of the terpolymer and
component (ii) forms 30 to 70 wt% of the terpolymer; and
wherein $MFR_2$ is determined according to ISO 1133 (190 °C, 2.16 kg load).

In a further aspect, the invention provides a multimodal ethylene terpolymer comprising:

($i_o$) 0.5-5.0 wt.% of a copolymer of ethylene and at least one C4-C12 comonomer having an $MFR_2$ of 30 to 80 g/10min;
($i_a$) 25-69.5 wt.% of a copolymer of ethylene and at least one C4-C12 comonomer which copolymer is different from copolymer ($i_o$) wherein the $MFR_2$ of components ($i_o$) and ($i_a$) combined is 30 to 80 g/10 min and wherein the $MFR_2$ ratio of ($i_a + i_o$)/($i_o$) is in the range of 0.5 to 2.5 and
(ii) 30-70 wt.% of a copolymer of ethylene and at least one C4-C12 comonomer which copolymer is different from copolymer ($i_o$) and (i);
wherein the $MFR_2$ of the terpolymer is 1.5 to 10 g/10min, and wherein
the density of the terpolymer is 905 to 940 kg/m$^3$

In a further aspect, the invention provides an article comprising an ethylene terpolymer as defined above, below, or in the claims, preferably a film.

The features of the aspects and/or embodiments indicated herein are usable individually and in combination in all aspects and embodiments of the invention where technically viable, unless otherwise indicated.

## Detailed description of the invention

The process according to the present invention is a process for the preparation of a multimodal ethylene terpolymer. Herein, the wording 'the terpolymer', 'the ethylene terpolymer', the 'terpolymer of the invention' are used interchangeably.

The term "multimodal" in the context of the ethylene terpolymer means herein, unless otherwise stated, multimodality with respect to molecular weight distribution and includes also bimodal polymers. Generally, a polyethylene comprising at least two polyethylene fractions, which have been produced under different polymerization conditions resulting in different (weight average) molecular weights and molecular weight distributions for the fractions, is referred to as "multimodal". The prefix "multi" relates to the number of different polymer fractions present in the polymer. Thus, for example, multimodal polymer includes so called "bimodal" polymer consisting of two fractions. In a particular embodiment, the multimodal ethylene terpolymer described herein is a bimodal ethylene terpolymer.

The form of the molecular weight distribution curve, i.e. the appearance of the graph of the polymer weight fraction as a function of its molecular weight, of a multimodal polymer will show two or more maxima or is typically distinctly broadened in comparison with the curves for the individual fractions. For example, if a polymer is produced in a sequential multistage process, utilizing reactors coupled in series and using different conditions in each reactor, the polymer fractions produced in the different reactors will each have their own molecular weight distribution and weight average molecular weight. When the molecular weight distribution curve of such a polymer is recorded, the individual curves from these fractions form typically together a broadened molecular weight distribution curve for the total resulting polymer product. In the present invention, the at least three polymerization steps (a)-(c) result in a multimodal ethylene terpolymer.

A terpolymer is a polymer comprising three different monomers. An ethylene terpolymer is therefore a copolymer of ethylene with two different comonomers. In the sense of the invention, terpolymer may thereby also encompass a multimodal ethylene composition(s) comprising three different monomers. Preferably, in the ethylene terpolymer of the invention, the ethylene will be the most abundant monomer present. Preferably, at least 50 wt% of the monomers are ethylene, even more preferably at least 60 wt%, such as at least 70 wt%, such as at least 80 wt%.

## Prepolymerisation step (a)

The process of the invention features a prepolymerization step, in which ethylene and at least one $C_4$-$C_{12}$ comonomer are prepolymerised to produce a copolymer component ($i_o$). The purpose of the prepolymerization is to polymerize a small amount of polymer onto the catalyst at a low temperature and/or a low monomer concentration. By prepolymerization it is possible to improve the performance of the catalyst in slurry and/or modify the properties of the final polymer. The prepolymerization step may be conducted in slurry or in gas phase. Preferably, the prepolymerization is conducted in slurry, preferably in a loop reactor. The prepolymerization is then preferably conducted in an inert /the rt, preferably the diluent is a low-boiling hydrocarbon having from 1 to 4 carbon atoms or a mixture of such hydrocarbons.

The temperature in the prepolymerization step is typically from 0 to 90 °C, preferably from 20 to 80 °C, more preferably from 40 to 70 °C, more preferably from 40 to 60 °C.

The pressure in the prepolymerisation step is not critical and is typically from 1 to 150 bar, preferably from 10 to 100 bar (1000 to 10000 kPa), e.g. 30 to 80 bar (3000 to 8000 kPa).

Hydrogen may be fed into the reactor to control the molecular weight of the polymer as known in the art. Hydrogen is fed during one or more polymerisation steps, preferably during all polymerisation steps. Furthermore, one or more alpha-olefin comonomers are preferably added into the reactor e.g. to control the density of the polymer product. The actual amount of such hydrogen and comonomer feeds depends on the catalyst that is used and the desired melt index (or molecular weight) and density (or comonomer content) of the resulting polymer.

In the prepolymerisation step the ethylene is copolymerised with a first $C_{4-12}$ comonomer, such as a $C_{4-12}$ alpha-olefin Preferably this comonomer is selected from 1-butene, 1-hexene, 4-methyl-1-pentene, 1-octene or 1-decene. Preferably, in the prepolymerisation step, the ethylene is copolymerised with 1-butene. Typically, the prepolymerised component ($i_o$) will have a comonomer content, preferably a $C_4$ content, of 1-10 wt%, such as 1-6 wt% or 2-5 wt%.

The polymer ($i_o$) produced in the prepolymerisation stage has an $MFR_2$ of 30-80 g/10min, especially 40-60 g/10min.

Component ($i_o$) forms 0.5 to 5.0 wt% of the terpolymer.

### First polymerisation step (b)

In step (b), ethylene and at least one $C_4$-$C_{12}$ comonomer are polymerised in the presence of component ($i_o$) to produce component (i). Preferably, the same catalyst is used for the first polymerisation step (b), e.g. a single site catalyst. Preferably the terpolymer is made using a slurry polymerization in a loop reactor followed by a gas phase polymerization in a gas phase reactor (step (c)).

The first polymerisation step (b) is typically a slurry polymerization which may be conducted in any known reactor used for slurry polymerization. Such reactors include a continuous stirred tank reactor and a loop reactor. It is especially preferred to conduct the first polymerization in a loop reactor. Thus, in a typical embodiment, both steps (a) and (b) are carried out in a loop reactor. In such reactors the slurry may be circulated with a high velocity along a closed pipe by using a circulation pump. Loop reactors are generally known in the art and examples are given, for instance, in US4582816, US3405109, US3324093, EP479186 and US5391654.

It is sometimes advantageous to conduct the slurry polymerization above the critical temperature and pressure of the fluid mixture. Such operation is described in US5391654. In such operation the temperature is typically from 85 to 110 °C, preferably from 90 to 105 °C and the pressure is from 40 to 150 bar, preferably from 50 to 100 bar.

Typically, however, polymerisation stage (b) will be carried out at temperatures of 50-120°C, such as 60-110°C or 70-100°C. The pressure in this step is typically from 1 to 150 bar, preferably from 10 to 100 bar (1000 to 10000 kPa), e.g. 30 to 80 bar (3000 to 8000 kPa).

The slurry may be withdrawn from the reactor either continuously or intermittently. A preferred way of intermittent withdrawal is the use of settling legs where slurry is allowed to concentrate before withdrawing a batch of the concentrated slurry from the reactor. The continuous withdrawal is advantageously combined with a suitable concentration method, e.g. as disclosed in EP1310295 and EP1591460.

Hydrogen may be fed into the reactor to control the molecular weight of the polymer as known in the art. Furthermore, one or more alpha-olefin comonomers are preferably added into the reactor e.g. to control the density of the polymer product. The actual amount of such hydrogen and comonomer feeds depends on the catalyst that is used and the desired melt index (or molecular weight) and density (or comonomer content) of the resulting polymer.

In the first polymerisation step (b), ethylene is copolymerised with a $C_4$-$C_{12}$ comonomer, e.g. 1-butene, 1-hexene, 4-methyl-1-pentene, 1-octene or 1-decene. Preferably, in the first polymerisation step (b), the ethylene is copolymerised with 1-butene or 1-hexene, typically 1-butene. Typically, ethylene will be copolymerised with the same comonomer as that used in the prepolymerisation step. Typically, the comonomer used in the prepolymerisation stage (a) and first polymerisation stage (b) will be a different comonomer than the one used in the second polymerisation step (c). Typically, the comonomer used in the prepolymerisation stage (a) and the first polymerisation stage (b) will be a lower alpha olefin than the one used in the second polymerisation step (c).

The comonomer/C2 ratio in polymer (i) is preferably in the range of 50-300 mol/kmol, e.g.100-250 mol/kmol. This ratio will typically be a C4/C2 ratio.

The $MFR_2$ of component (i) (which incorporates $i_o$) is in the range of 30 to 80 g/min, preferably in the range 40-80 g/10min, such as 50-70 g/10min.

The $MFR_2$ ratio $i/i_o$ may be in the range 0.5 to 2.5, preferably 0.5 to 2.0, more preferably 1.0 to 2.0, i.e. the $MFR_2$ of the first polymerised component (i) is preferably about the same as the $MFR_2$ of the prepolymerised component ($i_o$).

The density of component (i) is preferably greater than 920 kg/m$^3$, more preferably greater than 930 kg/m$^3$ or 940 kg/m$^3$. Suitable ranges include 920-960 kg/m$^3$ or 930-950 kg/m$^3$.

Component (i) (which incorporates component $i_o$) forms 30-70 wt% of the terpolymer, such as 30-50 wt% of the terpolymer.

**Second polymerisation step (c)**

In polymerisation step (c), ethylene is copolymerised with at least one $C_4$-$C_{12}$ comonomer in the presence of component (i) to produce component (ii). In step (c), ethylene is polymerised with at least one $C_4$-$C_{12}$ comonomer, preferably a $C_6$-$C_{12}$-alpha-olefin typically selected from the group consisting of 1-hexene, 4-methyl-1-pentene, 1-octene and 1-decene, preferably 1-hexene.

In a particular embodiment, step (c) is carried out in the absence of triethylaluminium (TEAL). In a particular embodiment, step (c) is carried out in the absence of an alkylalumium cocatalyst. The combination of the absence of TEAL in the gas phase step (c) and the relationship of the MFR of the prepolymer component and the component (i) is especially important and this combination forms a particular aspect of the invention.

The polymerization in the second polymerization zone is preferably conducted in the gas phase, (i.e. in a gas phase reactor, or GPR), preferably in a fluidized bed reactor, in a fast fluidized bed reactor or in a settled bed reactor, or in any combination of these. The polymerization in the second polymerization zone is more preferably conducted in a fluidized bed gas phase reactor. In this step, ethylene is polymerized together with at least one $C_4$-$C_{12}$ comonomer in the presence of a polymerization catalyst. The polymerisation step (c) is carried out in the presence of the reaction mixture (i) from the first polymerization step. The reactor typically contains a fluidized bed comprising the growing polymer particles containing the active catalyst located above a fluidization grid.

The polymer bed is fluidized with the help of the fluidization gas comprising the olefin monomer, eventual comonomer(s), eventual chain growth controllers or chain transfer agents, such as hydrogen, and eventual inert gas. The fluidization gas is introduced into an inlet chamber at the bottom of the reactor. One or more of the above-mentioned components may be continuously added into the fluidization gas to compensate for losses caused, among other, by reaction or product withdrawal. The fluidization gas passes through the fluidized bed. The superficial velocity of the fluidization gas must be higher that minimum fluidization velocity of the particles contained in the fluidized bed, as otherwise no fluidization would occur. On the other hand, the velocity of the gas should be lower than the onset velocity of pneumatic transport, as otherwise the whole bed would be entrained with the fluidization gas. When the fluidization gas is contacted with the bed containing the active catalyst the reactive components of the gas, such as monomers and chain transfer agents, react in the presence of the catalyst to produce the polymer product. At the same time the gas is heated by the reaction heat.

The unreacted fluidization gas is removed from the top of the reactor and cooled in a heat exchanger to remove the heat of reaction. The gas is cooled to a temperature which is lower than that of the bed to prevent the bed from heating because of the reaction. It is possible to cool the gas to a temperature where a part of it condenses. When the liquid droplets enter the reaction zone they are vaporised. The vaporisation heat then contributes to the removal of the reaction heat. This kind of operation is called condensed mode and variations of it are disclosed, among others, in WO-A-2007/025640, US-A-4543399, EP-A-699213 and WO-A- 94/25495. It is also possible to add condensing agents into the recycle gas stream, as disclosed in EP-A-696293. The condensing agents are non-polymerizable components, such as n-pentane, isopentane, n-butane or isobutane, which are at least partially condensed in the cooler.

The gas is then compressed and recycled into the inlet chamber of the reactor. Prior to the entry into the reactor fresh reactants are introduced into the fluidization gas stream to compensate for the losses caused by the reaction and product withdrawal. It is generally known to analyze the composition of the fluidization gas and introduce the gas components to keep the composition constant. The actual composition is determined by the desired properties of the product and the catalyst used in the polymerization. The catalyst may be introduced into the reactor in various ways, either continuously or intermittently. Where the gas phase reactor is a part of a reactor cascade the catalyst is usually dispersed within the polymer particles from the preceding polymerization stage. The polymer particles may be introduced into the gas phase reactor as disclosed in EP-A-1415999 and WO-A-00/26258. Especially if the preceding reactor is a slurry reactor it is advantageous to feed the slurry directly into the fluidized bed of the gas phase reactor as disclosed in EP-A-887379, EP-A-887380, EP-A-887381 and EP-A-991684. The polymeric product may be withdrawn from the gas phase reactor either continuously or intermittently. Combinations of these methods may also be used. Continuous withdrawal is disclosed, among others, in WO-A-00/29452. Intermittent withdrawal is disclosed, among others, in US-A-4621952, EP-A-188125, EP-A-250169 and EP-A-579426.

Also antistatic agent(s), such as water, ketones, aldehydes and alcohols, may be introduced into the gas phase reactor if needed. The reactor may also include a mechanical agitator to further facilitate mixing within the fluidized bed.

Typically the second polymerisation stage (c) is operated at a temperature within the range of from 50 to 100 °C, preferably from 65 to 90 °C. The pressure is typically from 5 to 40 bar, preferably from 10 to 30 bar.

Component (ii) forms 30 to 70 wt% of the terpolymer, such as 40-70 wt% or 50-70 wt% of the terpolymer.

**Catalyst**

Any catalyst may be used to prepare the terpolymer of the invention, such a Ziegler Natta or single site catalyst. Preferred Ziegler-Natta catalysts comprise a transition metal component and an activator. The transition metal component comprises a metal of Group 4 or 5 of the Periodic System (IUPAC) as an active metal. In addition, it may contain other metals or elements, like elements of Groups 2, 13 and 17. Preferably, the transition metal component is a solid. More preferably, it has been supported on a support material, such as inorganic oxide carrier or magnesium halide. Examples of such catalysts are given, among others in WO 95/35323, WO 01/55230, WO 2004/000933, EP 810235 and WO 99/51646.

Preferably, terpolymer is produced using a single site catalyst, which includes metallocene catalyst and non-metallocene catalyst, which all terms have a well-known meaning in the art. The term "single site catalyst" means herein the catalytically active metallocene compound or complex combined with a cocatalyst. The metallocene compound or complex is referred herein also as organometallic compound (C). The organometallic compound (C) comprises a transition metal (M) of Group 3 to 10 of the Periodic Table (IUPAC 2007) or of an actinide or lanthanide.

The term "an organometallic compound (C)" in accordance with the present invention includes any metallocene or non-metallocene compound of a transition metal which bears at least one organic (coordination) ligand and exhibits the catalytic activity alone or together with a cocatalyst. The transition metal compounds are well known in the art and the present invention covers compounds of metals from Group 3 to 10, e.g. Group 3 to 7, or 3 to 6, such as Group 4 to 6 of the Periodic Table, (IUPAC 2007), as well lanthanides or actinides. In an embodiment the organometallic compound (C) has the following formula (I):

$$(L)_m R_n M X_q \qquad (I)$$

wherein "M" is a transition metal (M) transition metal (M) of Group 3 to 10 of the Periodic Table (IUPAC 2007),

each "X" is independently a monoanionic ligand, such as a $\sigma$-ligand,
each "L" is independently an organic ligand which coordinates to the transition metal "M",
"R" is a bridging group linking said organic ligands (L),
"m" is 1, 2 or 3, preferably 2;
"n" is 0, 1 or 2, preferably 1 ,
"q" is 1, 2 or 3, preferably 2 and

m+q is equal to the valency of the transition metal (M).

"M" is preferably selected from the group consisting of zirconium (Zr), hafnium (Hf), or titanium (Ti), more preferably selected from the group consisting of zirconium (Zr) and hafnium (Hf). "X" is preferably a halogen, most preferably Cl.

Most preferably the organometallic compound (C) is a metallocene complex which comprises a transition metal compound, as defined above, which contains a cyclopentadienyl, indenyl or fluorenyl ligand as the substituent "L". Further, the ligands "L" may have substituents, such as alkyl groups, aryl groups, arylalkyl groups, alkylaryl groups, silyl groups, siloxy groups, alkoxy groups or other heteroatom groups or the like. Suitable metallocene catalysts are known in the art and are disclosed, among others, in WO-A- 95/12622, WO-A-96/32423, WO-A-97/28170, WO-A-98/32776, WO-A-99/61489, WO-A- 03/010208, WO-A-03/051934, WO-A-03/051514, WO-A-2004/085499, EP-A- 1752462 and EP-A-1739103.

The use of bis(1-methyl-3-n-butylcyclopentadienyl) zirconium (IV) chloride is especially preferred. Most preferred single site catalyst is a metallocene catalyst which means the catalytically active metallocene complex, as defined above, together with a cocatalyst, which is also known as an activator. Suitable activators are metal alkyl compounds and especially aluminium alkyl compounds known in the art. Especially suitable activators used with metallocene catalysts are alkylaluminium oxy-compounds, such as methylalumoxane (MAO), tetraisobutylalumoxane (TIBAO) or hexaisobutylalumoxane (HIBAO).

In a particular embodiment, the polymerisation in steps (a) to (c) in the process of the invention is carried out in the presence of the same catalyst. Typically, therefore, the catalyst components are preferably all introduced to the prepolymerization step.

**Terpolymer**

The terpolymer may be formed from ethylene along with at least two $C_4$-$C_{12}$ comonomers, e.g. 1-butene, 1-hexene, 4-methyl-1-pentene, 1-octene or 1-decene. In all embodiments of the invention, the term comonomer will typically refer to alpha-olefins. Preferably, the terpolymer contains ethylene and two comonomers selected from 1-butene, 1-hexene, 4-methyl-1-pentene, 1-octene or 1-decene, preferably 1-butene and 1-hexene. Typically, the terpolymer will comprise 1-butene and one higher alpha olefin comonomer. Such higher alpha-olefin comonomers are preferably C6-C12-alpha-olefins selected from the group of 1-hexene, 4-methyl-1-pentene, 1-octene and 1-decene, more preferably 1-hexene or 1-octene, most preferably 1-hexene is used as second comonomer along with 1-butene.

Whilst it is possible for any component to comprise two or more comonomers, it is preferred if the components $i_o$, i and ii comprise a single comonomer to ethylene. A further option is an ethylene butene copolymer as component $i_o$ and i and an ethylene butene hexene terpolymer as component ii.

In a particular embodiment, the combination of ethylene and the two additional comonomers make up 90% by weight or more of the terpolymer, preferably 95% or more, more preferably 99% or more. In a particular embodiment, ethylene and the two further comonomers make up the entirety of the terpolymer.

Preferably, the terpolymer comprises an ethylene-butene copolymer and an ethylene-hexene copolymer component. In a particular embodiment, in the terpolymer:

component ($i_o$) is a copolymer of ethylene and 1-butene;
component ($i_a$) is a copolymer of ethylene and 1-butene; and/or
component (ii) is a copolymer of ethylene and 1-hexene.

The $MFR_2$ of the terpolymer is in the range of 1.5 to 10 g/10min, preferably 1.6 to 10 g/10min or 1.6 to 8 g/10min. Other suitable MFR2 ranges are 1.5 to 8.0 g/10min, 1.5 to 6.0 g/10min, or 2.0 to 6.0 g/10min. The polymer produced in step (c) (i.e. component ii) typically has a lower MFR2 than the polymer produced in step (b) (i.e. component i)

Typically, the $MFR_{21}$ of the terpolymer is in the range of 30-200 g/10min, such as 50-150 g/10min, 50-130 g/10min or 60-120 g/10min.

Typically, the terpolymer will have an FRR ($MFR_{21}/MFR_2$ ratio) in the range of equal to or greater than 20. Other suitable FRR ranges include 15 to 35, such as 18 to 28 or 20 to 25.

The terpolymer has a density in the range of 905 to 940 kg/m$^3$. Other suitable density ranges include 910-935 kg/m$^3$, preferably 910-930 kg/m$^3$, especially 915-930 kg/m$^3$.

One advantageous property of the terpolymers produced by the process of the invention is that they possess low gel content. It will be appreciated that the specific gel level in a polymer depends on the nature of the process, e.g. whether pilot or industrial scale, however the gel counts observed in the present invention are low compared to an equivalent process in which, for example, the MFR of the prepolymer component does not meet the requirements of the invention.

In a particular aspect, the invention provides a multimodal ethylene terpolymer comprising:

($i_o$) 0.5-5.0 wt.% of a copolymer of ethylene and at least one C4-C12 comonomer having an $MFR_2$ of 30 to 80 g/10min;
($i_a$) 25-69.5 wt.% of a copolymer of ethylene and at least one C4-C12 comonomer which copolymer is different from copolymer ($i_o$) wherein the $MFR_2$ of components ($i_o$) and ($i_a$) combined is 30 to 80 g/10 min and wherein the $MFR_2$ ratio of ($i_a$ + $i_o$)/($i_o$) is in the range of 0.5 to 2.5; and
(ii) 30-70 wt.% of a copolymer of ethylene and at least one C4-C12 comonomer which copolymer is different from ($i_o$) and (i);
wherein the $MFR_2$ of the terpolymer is 1.5 to 10 g/10min, and wherein
the density of the terpolymer is 905 to 940 kg/m$^3$

In a particular embodiment, the terpolymer has a ratio of Mz+1/Mw of at least 3.0 such as in the range 3.0-4.5, preferably 3.0-4.4.

In a further particular embodiment, the terpolymer has Mz/Mw of at least 2.0 such as in the range 2.0 to 4.0, more preferably in the range 2.0-3.8.

The terpolymer of the invention is also believed to have a unique molecular signature. This can be characterised using crossfractionation chromatography (CFC). The Mz(max) is maximum Mz value of the fraction eluting in CFC at a temperature of 30 to 82°C. The Mz (>90°C) is the maximum Mz of the fraction eluting at >90°C or more in CFC. It is especially interesting, if the terpolymer of the invention satisfies the equation:

$$\text{Mz(max)} / \text{Mz(>90°C)} > 1.5.$$

Values for the Mz(max) may be in the range of 180,000 to 250,000. The Mz(max) preferably occurs at an elution temperature of between 65 and 82°C in CFC. The Mz>90°C is typically in the range of 80,000 to 130,000. The CFC method is described in Macromol. Symp. 2007, 257, 13-28 Ortin et al.

In particular, the combination of $MFR_2$ of 2.0 to 6.0 g/10min, a density of 915 to 920 kg/m$^3$ and an Mz(max) / Mz(>90°C) > 1.5 is advantageous.

### Article

The terpolymer of the invention may be used in the manufacture of any article such as a pipe, moulded article (blow, injection or rotomoulded articles) such as a cap or closure, artificial sports surface, geomembrane, and so on. The terpolymer of the invention is particularly suitable for use in films.

Typically, the film of the invention comprises at least one layer comprising the ethylene terpolymer of the invention. The film can be a monolayer film comprising the terpolymer or a multilayer film, wherein at least one layer of the film comprises the terpolymer. The terms "monolayer film" and multilayer film" have well known meanings in the art.

The monolayer film or layer of multilayer film of the invention may consist of the terpolymer as such or comprise a blend of the terpolymer together with further polymer(s). In case of blends, any further polymer is different from the terpolymer and is preferably a polyolefin such as an LLDPE or LDPE.

Preferably, the at least one layer of the invention comprises at least 50 wt%, preferably at least 60 wt%, preferably at least 70 wt%, more preferably at least 80 wt%, of the terpolymer of the invention. More preferably said at least one layer of the film of invention consists of the terpolymer of the invention.

In this regard, it will be appreciated that the below mentioned additives, like processing aids, can optionally be added to any layer during the film preparation process. A film layer which "consists of" the terpolymer of the invention may still contain standard polymer additives, e.g. 0 to 10 wt% of such additives. The term "consists of" excludes the presence of other polymer components (other than polymers that act as additive carriers, i.e. a masterbatch).

Accordingly, the films of the present invention may comprise a single layer (i.e. monolayer) or may be multilayered. Multilayer films typically, and preferably, comprise at least 3 layers.

The films are preferably produced by any conventional film extrusion procedure known in the art including cast film and blown film extrusion. Most preferably, the film is a blown or cast film. E.g. the blown film is produced by extrusion through an annular die and blowing into a tubular film by forming a bubble which is collapsed between nip rollers after solidification. The film can then be slit, cut or converted (e.g. gusseted) as desired. In a preferred embodiment, the film is a cast film.

Conventional film production techniques may be used in this regard. If the preferable blown or cast film is a multilayer film then the various layers are typically coextruded. The skilled man will be aware of suitable extrusion conditions.

The resulting films may have any thickness conventional in the art. The thickness of the film is not critical and depends on the end use. Thus, films may have a thickness of, for example, 300 $\mu$m or less, typically 6 to 200 $\mu$m, preferably 10 to 180 $\mu$m, e.g. 20 to 150 $\mu$m or 20 to 120 $\mu$m. If desired, the polymer of the invention enables thicknesses of less than 100 $\mu$m, e.g. less than 50 $\mu$m. Films of the invention with thickness even less than 20 $\mu$m can also be produced whilst maintaining good mechanical properties.

The films of the invention can be employed in a wide variety of end applications however they are of particular interest in the manufacture of food, drink and medical packaging. In particular the films may be utilised in lidding films, especially in conjunction with thermoformed containers made from a multilayer structure similar to that of the lid.

The films are of particular use in the packaging of products in which a tray is formed by thermoforming and a film applied across the top of that tray. Such packaging is common for cold meats, fish, fruit and so on. The low gel content leads to low extractables and hence a film that is attractive for food contact.

It is also possible to laminate the films of the invention to a substrate. Lamination techniques are well known in the art and substrate options include metal foils, other polyolefins, polymeric supports based on barrier films such as polyamides and so on.

### Brief description of the Figures

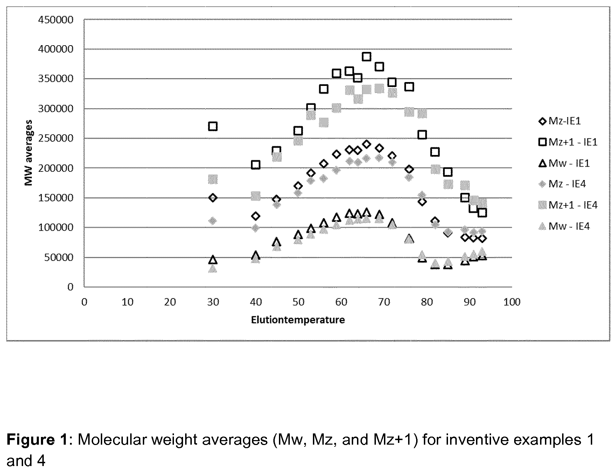

Figure 1 shows molecular weight averages (Mw, Mz, and Mz+1) for inventive examples 1 and 4 in CFC.

### Examples

### Melt Flow Rate

The melt flow rate) is determined according to ISO 1133 and is indicated in g/10 min. The MFR is an indication of the melt viscosity of the polymer. The MFR is determined at 190°C for polyethylene. The load under which the melt flow rate is determined is usually indicated as a subscript, for instance $MFR_2$ is measured under 2.16 kg load (condition D), $MFR_5$ is measured under 5 kg load (condition T) or $MFR_{21}$ is measured under 21.6 kg load (condition G).

**Density**

Density of the polymer was measured according to ISO 1183 / 1872-2B

**Molecular weight**

Molecular weight averages, molecular weight distribution (Mn, Mw, Mz, MWD)

Molecular weight averages (Mz, Mw and Mn), Molecular weight distribution (MWD) and its broadness, described by polydispersity index, PDI= Mw/Mn (wherein Mn is the number average molecular weight and Mw is the weight average molecular weight) were determined by Gel Permeation Chromatography (GPC) according to ISO 16014-1:2003, ISO 16014-2:2003, ISO 16014-4:2003 and ASTM D 6474-12 using the following formulas:

$$M_n = \frac{\sum_{i=1}^{N} A_i}{\sum_{i=1}^{N}(A_i/M_i)} \quad (1)$$

$$M_w = \frac{\sum_{i=1}^{N}(A_i \times M_i)}{\sum_{i=1}^{N} A_i} \quad (2)$$

$$M_z = \frac{\sum_{i=1}^{N}(A_i \times M_i^2)}{\sum_{i=1}^{N}(A_i/M_i)} \quad (3)$$

For a constant elution volume interval $\Delta V_i$, where $A_i$, and $M_i$ are the chromatographic peak slice area and polyolefin molecular weight (MW), respectively associated with the elution volume, $V_i$, where N is equal to the number of data points obtained from the chromatogram between the integration limits.

A high temperature GPC instrument, equipped with an infrared (IR) detector IR5 from PolymerChar (Valencia, Spain), equipped with 3 x Agilent-PLgel Olexis and 1x Agilent-PLgel Olexis Guard columns was used. As the solvent and mobile phase 1,2,4-trichlorobenzene (TCB) stabilized with 250 mg/L 2,6-Di tert butyl-4-methylphenol) was used. The chromatographic system was operated at 160 °C and at a constant flow rate of 1 mL/min. 200 μL of sample solution was injected per analysis. Data collection was performed using PolymerChar GPC-IR control software.

The column set was calibrated using universal calibration (according to ISO 16014-2:2003) with 19 narrow MWD polystyrene (PS) standards in the range of 0.5 kg/mol to 11 500 kg/mol. The PS standards were dissolved at room temperature over several hours. The conversion of the polystyrene peak molecular weight to polyolefin molecular weights is accomplished by using the Mark Houwink equation and the following Mark Houwink constants:

$$K_{PS} = 19 \times 10^{-3} \text{ mL/g}, \alpha_{PS} = 0.655$$

$$K_{PE} = 39 \times 10^{-3} \text{ mL/g}, \alpha_{PE} = 0.725$$

$$K_{PP} = 19 \times 10^{-3} \text{ mL/g}, \alpha_{PP} = 0.725$$

A third order polynomial fit was used to fit the calibration data.

All samples were prepared in the concentration range of 0.5 -1 mg/ml and dissolved at 160 °C for 2.5 hours for PP or 3 hours for PE under continuous gentle shaking.

**Description**

***Quantification of microstructure by NMR spectroscopy***

Quantitative nuclear-magnetic resonance (NMR) spectroscopy was used to quantify the content of unsaturated groups present in the polymers.

Quantitative $^1$H NMR spectra recorded in the solution-state using a Bruker Avance III 400 NMR spectrometer operating at 400.15 MHz. All spectra were recorded using a $^{13}$C optimised 10 mm selective excitation probehead at 125°C using nitrogen gas for all pneumatics. Approximately 250 mg of material was dissolved in 1,2-tetrachloroethane-$d_2$

(TCE-$d_2$) using approximately 3 mg of Hostanox 03 (CAS 32509-66-3) as stabiliser. Standard single-pulse excitation was employed utilising a 30 degree pulse, a relaxation delay of 10 s and 10 Hz sample rotation. A total of 128 transients were acquired per spectra using 4 dummy scans. This setup was chosen primarily for the high resolution needed for unsaturation quantification and stability of the vinylidene groups. {he10a, busico05a} All chemical shifts were indirectly referenced to TMS at 0.00 ppm using the signal resulting from the residual protonated solvent at 5.95 ppm.

Characteristic signals corresponding to the presence of terminal aliphatic vinyl groups (R-CH=CH$_2$) were observed and the amount quantified using the integral of the two coupled inequivalent terminal CH$_2$ protons (Va and Vb) at 4.95, 4.98 and 5.00 and 5.05 ppm accounting for the number of reporting sites per functional group:

$$Nvinyl = IVab / 2$$

Characteristic signals corresponding to the presence of internal vinylidene groups (RR'C=CH$_2$) were observed and the amount quantified using the integral of the two CH$_2$ protons (D) at 4.74 ppm accounting for the number of reporting sites per functional group:

$$Nvinylidene = ID / 2$$

When characteristic signals corresponding to the presence of internal cis-vinylene groups (E-RCH=CHR'), or related structure, were observed, then the amount quantified using the integral of the two CH protons (C) at 5.39 ppm accounting for the number of reporting sites per functional group:

$$Ncis = IC / 2$$

When characteristic signals corresponding to the presence of internal cis-vinylene groups (E-RCH=CHR'), or related structure, were not visually observed, then these groups were not counted and the parameter Ncis was not used.

Characteristic signals corresponding to the presence of internal trans-vinylene groups (Z-RCH=CHR') were observed and the amount quantified using the integral of the two CH protons (T) at 5.45 ppm accounting for the number of reporting sites per functional group:

$$Ntrans = IT / 2$$

Characteristic signals corresponding to the presence of internal trisubstituted-vinylene groups (RCH=CR'R''), or related structure, were observed and the amount quantified using the integral of the CH proton (Tris) at 5.14 ppm accounting for the number of reporting sites per functional group:

$$Ntris = ITris$$

The Hostanox 03 stabliser was quantified using the integral of multiplet from the aromatic protons (A) at 6.92, 6.91, 6.69 and at 6.89 ppm and accounting for the number of reporting sites per molecule:

$$H = IA / 4$$

As is typical for unsaturation quantification in polyolefins the amount of unsaturation was determined with respect to total carbon atoms, even though quantified by $^1$H NMR spectroscopy. This allows direct comparison to other microstructure quantities derived directly from $^{13}$C NMR spectroscopy.

The total amount of carbon atoms was calculated from integral of the bulk aliphatic signal between 2.85 and -1.00 ppm with compensation for the methyl signals from the stabiliser and carbon atoms relating to unsaturated functionality not included by this region:

NCtotal = (Ibulk - 42 * H)/2 + 2 * Nvinyl + 2 * Nvinylidene + 2 * Ncis + 2 * Ntrans + 2 * Ntris

The content of unsaturated groups (U) was calculated as the number of unsaturated groups in the polymer per thousand total carbons (kCHn):

$$U = 1000 * N / NCtotal$$

The total amount of unsaturated group was calculated as the sum of the individual observed unsaturated groups and thus also reported with respect per thousand total carbons:

$$Utotal = Uvinyl + Uvinylidene + Ucis + Utrans + Utris$$

The relative content of a specific unsaturated group (U) is reported as the fraction or percentage of a given unsaturated group with respect to the total amount of unsaturated groups:

$$[U] = Ux / Utotal$$

**References**

he10a
He, Y., Qiu, X, and Zhou, Z., Mag. Res. Chem. 2010, 48, 537-542.

busico05a
Busico, V. et. al. Macromolecules, 2005, 38 (16), 6988-6996

**Cross Fractionation Chromatography (CFC):**

The chemical composition distribution as well as the determination of the molecular weight distribution and the corresponded molecular weight averages (Mn, Mw and Mv) at a certain elution temperature (polymer crystallinity in solution) were determined by a full automated Cross Fractionation Chromatography (CFC) as described by Ortin A., Monrabal B., Sancho-Tello J., Macromol. Symp., 2007, 257, 13-28.

A CFC instrument (PolymerChar, Valencia, Spain) was used to perform the crossfractionation chromatography (TREF x SEC). A four-band IR5 infrared detector (PolymerChar, Valencia, Spain) was used to monitor the concentration. Around 40 mg of the polymer sample was dissolved in 25 ml TCB in the stainless steel vessel for 150 min at 150 °C. Once the sample was completely dissolved an aliquot of 0.5 ml was loaded into the TREF column and stabilized for a while at 110 °C. The polymer was crystallized and precipitate to a temperature of 30°C by applying a constant cooling rate of 0.1 °C/min. A discontinuous elution process is performed using the following temperature steps: (30, 40, 45, 50, 53, 56, 59, 62, 64, 66, 69, 72, 76, 79, 82, 85, 89, 91, 93, 95, 97, 100, 110, and 120)

In the second dimension, the GPC analysis, 3 PL Olexis columns and 1x Olexis Guard columns from Agilent (Church Stretton, UK) were used as stationary phase. As eluent 1,2,4-trichlorobenzene (TCB, stabilized with 250 mg/L 2,6-Di tert butyl-4-methyl-phenol) at 150 °C and a constant flow rate of 1 mL/min were applied. The column set was calibrated using universal calibration (according to ISO 16014-2:2003) with at least 15 narrow MWD polystyrene (PS) standards in the range of 0.5 kg/mol to 11 500 kg/mol. Following Mark Houwink constants were used to convert PS molecular weights into the PE molecular weight equivalents.

$$K_{PS} = 19 \times 10^{-3} \text{ mL/g, } \alpha_{PS} = 0.655$$

$$K_{PE} = 39 \times 10^{-3} \text{ mL/g, } \alpha_{PP} = 0.725$$

A third order polynomial fit was used to fit the calibration data. Data processing was performed using the software provided from PolymerChar with the CFC instrument.

**Mz ratio:**

The Mz ratio is calculated in the following way:

$$\text{Mz ratio} = (\text{Mz(max)}/\text{Mz>90°C})$$

Mz(max) is the Mz value of the molecular weight distribution at the peak maximum of the CFC fraction eluting between 30 and 82°C, where Mz>90°C is the Mz value of the molecular weight distribution at the peak maximum of the CFC fraction eluting above 90°C.

If there is no peak maximum for the fraction eluting below 82°C, the elution temperature for the corresponded molecular weight distribution to determine Mz(max) is 82°C. The Mz (max) or Mz>90°C is the z-average molecular weight of the polymer fraction eluting at the corresponded peak maximum or if the peak maximum is between two CFC fractions, the Mz is obtained by a linear regression.

**Catalyst preparation**

130 grams of a metallocene complex bis(1-methyl-3-n-butylcyclopentadienyl) zirconium (IV) dichloride (CAS no. 151840-68-5), and 9.67 kg of a 30% solution of commercial methylalumoxane (MAO) in toluene were combined and 3.18 kg dry, purified toluene was added. The thus obtained complex solution was added onto 17 kg silica carrier Sylopol 55 SJ (supplied by Grace) by very slow uniform spraying over 2 hours. The temperature was kept below 30°C. The mixture was allowed to react for 3 hours after complex addition at 30°C.

**Table 1:** Preparation of inventive examples 1-4

| Inventive Example | IE1 | IE2 | IE3 | IE4 |
|---|---|---|---|---|
| **A1 Prepoly reactor (io)** | | | | |
| Temp. (°C) | 50 | 50 | 50 | 50 |
| Press. (kPa) | 5630 | 5627 | 5624 | 5606 |
| H2 (g/h) | 0.2 | 0.2 | 0.2 | 0.2 |
| C4 (g/h) | 200 | 200 | 200 | 200 |
| C2 (kg/h) | 2.0 | 2.0 | 2.0 | 2002 |
| MFR2 (g/10 min) | ~ 40-60 | ~ 40-60 | ~ 40-60 | ~ 40-60 |
| C4 (wt-%) | ~3- 3.5 | ~3- 3.5 | ~3- 3.5 | ~3- 3.5 |
| **A2 loop reactor (i)** | | | | |
| Temp. (°C) | 85 | 85 | 85 | 85 |
| Press. (kPa) | 5181 | 5154 | 5170 | 5158 |
| C2 conc. (mol-%) | 3.5 | 2.8 | 2.4 | 2.6 |
| H2/C2 ratio (mol/kmol) | 0.4 | 0.4 | 0.4 | 0.4 |
| C4/C2 ratio (mol/kmol) | 146 | 184 | 186 | 191 |
| C3 feed (kg/h) | fspl | 150.1 | 150.0 | 112.8 |
| Density by balance, plaque | 941.3 | 940.7 | 940.3 | 940.9 |
| MFR2 (g/10 min) | 67..0 | 66.7 | 58.0 | 60.0 |
| Ash content (ppm) | 600.0 | 500 | 550 | 440 |
| Catalyst productivity kg PE/ g cat | 1.67 | 2.00 | 1.82 | 2.27 |
| **A3 GPR** | | | | |
| Temp. (°C) | 75 | 75 | 75 | 75 |
| Press. (kPa) | 2000 | 2000 | 2000 | 2000 |
| H2/C2 ratio (mol/kmol) | 0.30 | 0.30 | 0.28 | 0.33 |
| C6/C2 ratio (mol/kmol) | 31.4 | 16.9 | 16.9 | 30.3 |
| split % | 58.9 | 57.5 | 58.7 | 58.3 |
| Density | 917.6 | 927.1 | 926.2 | 918.3 |
| **Inventive Example** | **IE1** | **IE2** | **IE3** | **IE4** |
| (kg/m3) | | | | |

(continued)

| Inventive Example | IE1 | IE2 | IE3 | IE4 |
|---|---|---|---|---|
| MFR5 (g/10 min) | 8.30 | 13.60 | 11.30 | 8.97 |
| MFR2 (g/10 min) | 3.10 | 5.14 | 4.21 | 3.30 |
| Ash content (ppm) | 250 | 270 | 340 | 220 |
| Catalyst productivity kg PE/ g cat | 4.00 | 3.70 | 2.94 | 4.55 |
| TEAL feed (g/h) | 0.00 | 0.00 | 0.00 | 0.00 |
| **Powder** | | | | |
| Density (kg/m3) | 919.6 | 927.5 | 926.7 | 919.0 |
| MFR2 (g/10 min) | 3.33 | 4.68 | 4.04 | 3.62 |
| **Pellet** | | | | |
| MFR2 (g/10 min) | 3.0 | 4.7 | 3.9 | 3.3 |
| MFR21 (g/10 min) | 73.4 | 103.0 | 88.2 | 80.30 |
| Density (kg/m3) | 918.6 | 927.3 | 926.3 | 919.0 |
| Gels/kg (OCS) 100 - 299 um | 19768 | 9931 | 11861 | 11938 |
| Gels/kg (OCS) 300 - 599 um | 2471 | 1421 | 1081 | 726 |
| Gels/kg (OCS) 600 - 1000 um | 368 | 190 | 125 | 48 |
| Gels/kg (OCS) > 1000 um | 29 | 9 | 14 | 0 |

Comparative polymers were prepared following the protocols in table 2 using the same catalyst.

Table 2

| Example | CE1 | CE2 | CE3 | CE4 |
|---|---|---|---|---|
| **A1 Prepoly reactor (io)** | | | | |
| Temp. (°C) | 50 | 50 | 50 | 50 |
| Press. (kPa) | 5242.1 | 5255 | 5241.2 | 5241.9 |
| H2 (g/h) | 0.1 | 0.1 | 0.1 | 0.1 |
| C4 (kg/h) | 54 | 54 | 54 | 53.7 |
| C2 (kg/h) | 2.0 | 2.0 | 2 | 2.0 |
| MFR2 (g/10 min) | ~5-10 | ~5-10 | ~5-10 | ~5-10 |
| **A2 loop reactor (i)** | | | | |
| Temp. (°C) | 85 | 85 | 85 | 85 |
| Press. (kPa) | 5216 | 5217 | 5231 | 5226 |
| C2 conc. (mol-%) | 3.8 | 3.8 | 5.1 | 5.3 |
| H2/C2 ratio (mol/kmol) | 0.20 | 0.20 | 0.10 | 0.10 |
| A2 C4/C2 ratio (mol/kmol) | 206 | 206 | 116 | 78 |
| Density by balance, plaque | 940.9 | 940.6 | 915.1 | 939.9 |
| MFR2 (g/10 min) | 61 | 60 | 11 | 5.2 |
| **A3 GPR** | | | | |
| Temp. (°C) | 75 | 75 | 75 | 75 |
| Press. (kPa) | 2000 | 2000 | 2000 | 2000 |
| H2/C2 ratio (mol/kmol) | 0.20 | 0.20 | 0.30 | 0.20 |

(continued)

| A3 GPR | | | | |
|---|---|---|---|---|
| C4/C2 ratio (mol/kmol) | 0 | 0 | 0 | 109 |
| C6/C2 ratio (mol/kmol) | 42 | 42 | 40 | 0 |
| split % | 56 | 56 | 59 | 58 |
| Density (kg/m3) | 915.6 | 915.7 | 940.1 | 920.3 |
| MFR5 (g/10 min) | 8.25 | 8.38 | 28.20 | 4.6 |
| A3 MFR2 (g/10 min) | 2.9 | 3.1 | 11.0 | 1.9 |
| TEAL Feed ( g/h) | 10.0-12.0 | 10.0-12.0 | 10.0-12.0 | 10.0-12.0 |
| **Base resin** | | | | |
| Density (kg/m3) | 917 | 916.7 | 916.3 | 921.2 |
| MFR2 (g/10 min) | 3.3 | 3.2 | 2.3 | 1.7 |
| Pellet | | | | |
| MFR2 (g/10 min) | 3.23 | 3.17 | 2.3 | 1.8 |
| Density (kg/m3) | 916.6 | 916.6 | 916.4 | 921.3 |
| Gels/kg (OCS) 100 - 299 um | 526352 | 695969 | 422935 | 353436 |
| Gels/kg (OCS) 300 - 599 um | 84655 | 127243 | 47050 | 23495 |
| Gels/kg (OCS) 600 - 1000 um | 3553.7 | 3922.8 | 927 | 299.6 |
| Gels/kg (OCS) > 1000 um | 278 | 203.9 | 96 | 34 |

| Table 3a. | IE1 | IE2 | IE3 | IE4 |
|---|---|---|---|---|
| **A1 Prepoly reactor** | | | | |
| MFR2 (g/10 min) | ~ 40-60 | ~ 40-60 | ~ 40-60 | ~ 40-60 |
| **A2 Loop** | | | | |
| MFR2 (g/10 min) | 67.0 | 66.7 | 58.0 | 60.0 |
| $MFR_2$ ratio of (i)/(i$_o$) in range of 0.5 to 2.5 | Yes | Yes | Yes | yes |
| **Pellet** | | | | |
| MFR2 (g/10 min) | 3.0 | 4.7 | 3.9 | 3.3 |
| Density (kg/m3) | 918.6 | 927.3 | 926.3 | 919.0 |
| Gels/kg (OCS) 100 - 299 $\mu$m | 19768 | 9931 | 11861 | 11938 |
| Gels/kg (OCS) 300 - 599 $\mu$m | 2471 | 1421 | 1081 | 726 |
| Gels/kg (OCS) 600 - 1000 $\mu$m | 368 | 190 | 125 | 48 |
| Gels/kg (OCS) > 1000 $\mu$m | 29 | 9 | 14 | 0 |

Table 3b

| Example | CE1 | CE2 | CE3 | CE4 |
|---|---|---|---|---|
| **A1 Prepoly reactor** | | | | |
| MFR2 (g/10 min) | ~5-10 | ~5-10 | ~5-10 | ~5-10 |
| **A2 Loop** | | | | |
| MFR2 (g/10 min) | 61 | 60 | 11 | 5.2 |
| Pellet | | | | |

(continued)

| A2 Loop | | | | |
|---|---|---|---|---|
| MFR2 (g/10 min) | 3.3 | 3.2 | 2.3 | 1.7 |
| Density (kg/m3) | 916.6 | 916.6 | 916.4 | 921.3 |
| Gels/kg (OCS) 100 - 299 $\mu$m | 526352 | 695969 | 422935 | 353436 |
| Gels/kg (OCS) 300 - 599 $\mu$m | 84655 | 127243 | 47050 | 23495 |
| **Example** | **CE1** | **CE2** | **CE3** | **CE4** |
| Gels/kg (OCS) 600 - 1000 $\mu$m | 3553.7 | 3922.8 | 927 | 299.6 |
| Gels/kg (OCS) > 1000 $\mu$m | 278 | 203.9 | 96 | 34 |

In Table 3a/b, the inventive examples with the high MFR for component ($i_o$) produce terpolymers with lower gel counts. In comparative examples C1 to C4, the prepolymer fraction has an MFR of ~5 g/10min, and triethylaluminium (TEAL) was used as a cocatalyst in the GPR phase to scavenge impurities and activate the catalyst in the GPR. In the inventive examples 1-4, no TEAL was used. By matching the MFR of the prepolymerised component (io) to the polymerised component (i), beneficial gel count properties are obtained.

When employed as a layer in a multilayer film, the inventive examples produce films with better processability than competitor materials with comparable MFR, density and comonomer content. See Table 4 below:

Table 4: Comparison of competitor grades with inventive examples

| Grade name and batch no. | Mz/Mw | Mz+1/ Mw | FRR(21 /2) | Density |
|---|---|---|---|---|
| **EXCEED 3518CB** | 1.77 | 2.72 | 16.08 | 918 |
| **ELTEX PF6130AA** | 2.08 | 4.24 | 18.58 | 918 |
| EXCEED 3527PA | 1.84 | 2.85 | 16.33 | 927 |
| Inventive Examples | | | | |
| **1** | 2.15 | 3.58 | 24.34 | 917.6 |
| **2** | 2.13 | 3.62 | 21.18 | 927.1 |
| **3** | 2.11 | 3.59 | 21.52 | 926.2 |
| **4** | 2.09 | 3.46 | 22.80 | 918.3 |
| Exceed 3518CB is a metallocene ethylene hexene copolymer. ELTEX PF6130AA is a metallocene ethylene hexene copolymer. Exceed 3527PA is a metallocene ethylene hexene copolymer. | | | | |

Table 5: Molecular weight data for the terpolymers of the invention

| Inventive example | Mz(max) for individual fraction | Elution temp. at Mz(max) | Mz > 90°C | Mz ratio (Mz(max)/Mz>90°C) |
|---|---|---|---|---|
| **1** | 240000 | 66 | 82000 | 2.9 |
| **2** | 195000 | 79 | 121000 | 1.6 |
| **3** | 193000 | 79 | 123000 | 1.6 |
| **4** | 217000 | 69 | 93000 | 2.3 |

where Mz(max) is the highest Mz value determined by GPC of TREF fraction obtained by CFC analysis which are eluting between 30 and 82°C.

**Claims**

1.  A process for preparing a multimodal ethylene terpolymer comprising the steps of:

    (a) pre-polymerizing ethylene and at least one C4-C12 comonomer to produce a copolymer component ($i_o$) having a $MFR_2$ in the range of 30 to 80 g/10min;
    (b) in the presence of component ($i_o$), copolymerizing ethylene with a C4-C12 comonomer to produce component (i) wherein the $MFR_2$ of component (i) is in the range of 30 to 80 g/10min;
    (c) in the presence of component (i), polymerizing ethylene and at least one C4-C12 comonomer to produce component (ii);
    wherein hydrogen is fed during one or more of the polymerization steps;
    wherein the $MFR_2$ ratio of (i)/($i_o$) is in the range of 0.5 to 2.5;
    wherein the $MFR_2$ of the terpolymer is 1.5 to 10 g/10min, and
    wherein the density of the terpolymer is 905 to 940 kg/m$^3$;
    wherein component ($i_o$) forms 0.5 to 5.0 wt% of the terpolymer,
    component (i) (which incorporates component $i_o$) forms 30 to 70 wt% of the terpolymer and
    component (ii) forms 30 to 70 wt% of the terpolymer; and
    wherein $MFR_2$ is determined according to ISO 1133 (190 °C, 2.16 kg load).

2.  The process as claimed in 1, wherein step c) is carried out in the absence of TEAL.

3.  The process as claimed in claim 1 or 2, wherein the polymerization in steps (a) to (c) is carried out in the presence of the same single site catalyst.

4.  The process of any preceding claim in which steps (a) and (b) are carried out in a loop reactor and step (c) in a gas phase reactor.

5.  A multimodal ethylene terpolymer, comprising:

    ($i_o$) 0.5-5.0 wt.% of a copolymer of ethylene and at least one C4-C12 comonomer having an $MFR_2$ of 30 to 80 g/10min;
    ($i_a$) 25-69.5 wt.% of a copolymer of ethylene and at least one C4-C12 comonomer which copolymer is different from copolymer ($i_o$) wherein the $MFR_2$ of components ($i_o$) and ($i_a$) combined is 30 to 80 g/10 min and wherein the $MFR_2$ ratio of ($i_a$ + $i_o$)/($i_o$) is in the range of 0.5 to 2.5; and
    (ii) 30-70 wt.% of a copolymer of ethylene and at least one C4-C12 comonomer which copolymer is different from copolymer ($i_o$) and (i);
    wherein the $MFR_2$ of the terpolymer is 1.5 to 10 g/10min, and wherein
    the density of the terpolymer is 905 to 940 kg/m$^3$; and
    wherein $MFR_2$ is determined according to ISO 1133 (190 °C, 2.16 kg load).

6.  An ethylene terpolymer as claimed in claim 5 having a ratio of Mz+1/Mw of at least 3.0 such as in the range 3.0-4.5; and /or satisfying the equation Mz(max) / Mz(>90°C) > 1.5.

7.  An ethylene terpolymer as claimed in claim 5 to 6 having an Mz/Mw of at least 2.0 such as in the range 2.0 to 4.0, more preferably in the range 2.0-3.8.

8.  An ethylene terpolymer as claimed in claim 5 to 7, having a density in the range of 910-930 kg/m$^3$.

9.  An ethylene terpolymer as claimed in claim 5 to 8 having an MFR2 of 1.5-8.0 g/10min, preferably 2.0-6.0 g/10min.

10. An ethylene terpolymer as claimed in claim 5 to 9 having an FRR (MFR21/MFR2) equal to or greater than 20.0.

11. An ethylene terpolymer as claimed in claim 5 to 10, wherein component (i) has a density in the range 920-960 kg/m$^3$, preferably 930-950 kg/m$^3$; and/or an $MFR_2$ in the range 40-80 g/10min.

12. An ethylene terpolymer as claimed in claim 5 to 11 wherein said terpolymer comprises 30-50 wt% of component (i) and 50-70 wt% of component (ii).

**13.** An ethylene terpolymer as claimed in claim 5 to 12, wherein component ($i_o$) is a copolymer of ethylene and 1-butene;

component ($i_a$) is a copolymer of ethylene and 1-butene; and/or
component (ii) is a copolymer of ethylene and 1-hexene.

**14.** An article comprising an ethylene terpolymer as claimed in any of claims 5 to 13, preferably a film.

**Patentansprüche**

**1.** Verfahren zur Herstellung eines multimodalen Ethylen-Terpolymers, umfassend die Schritte von:

(a) Vorpolymerisieren von Ethylen und mindestens einem C4-C12-Comonomer, um eine Copolymerkomponente ($i_o$) zu produzieren, die eine $MFR_2$ im Bereich von 30 bis 80 g/10 min aufweist;
(b) in Gegenwart der Komponente ($i_o$), Copolymerisieren von Ethylen mit einem C4-C12-Comonomer, um die Komponente (i) zu produzieren; wobei die $MFR_2$ der Komponente (i) im Bereich von 30 bis 80 g/10 min liegt;
(c) in Gegenwart der Komponente (i), Polymerisieren von Ethylen und mindestens einem C4-C12-Comonomer, um die Komponente (ii) zu produzieren;
wobei Wasserstoff während einem oder mehreren der Polymerisationsschritte zugeführt wird;
wobei das $MFR_2$-Verhältnis von (i)/($i_o$) im Bereich von 0,5 bis 2,5 liegt;
wobei die $MFR_2$ des Terpolymers zwischen 1,5 bis 10 g/10 min liegt, und
wobei die Dichte des Terpolymers zwischen 905 und 940 kg/m³ liegt;
wobei die Komponente ($i_o$) 0,5 bis 5,0 Gew.-% des Terpolymers bildet,
die Komponente (i) (die die Komponente $i_o$ beinhaltet) 30 bis 70 Gew.-% des Terpolymers bildet und
die Komponente (ii) 30 bis 70 Gew.-% des Terpolymers bildet; und
wobei die $MFR_2$ gemäß ISO 1133 (190 °C, 2,16 kg Belastung) bestimmt wird.

**2.** Prozess nach Anspruch 1, wobei Schritt c) in Abwesenheit von TEAL durchgeführt wird.

**3.** Prozess nach Anspruch 1 oder 2, wobei die Polymerisation in den Schritten (a) bis (c) in Gegenwart desselben Einzelstellen-Katalysators durchgeführt wird.

**4.** Verfahren nach einem der vorstehenden Ansprüche, bei dem die Schritte (a) und (b) in einem Schleifenreaktor und Schritt (c) in einem Gasphasenreaktor durchgeführt werden.

**5.** Multimodales Ethylen-Terpolymer, umfassend:

($i_o$) 0,5-5,0 Gew.-% eines Copolymers aus Ethylen und mindestens ein C4-C12-Comonomer, das eine $MFR_2$ von 30 bis 80 g/10 min aufweist;
($i_a$) 25-69,5 Gew.-% eines Copolymers aus Ethylen und mindestens einem C4-C12-Comonomer, wobei das Copolymer sich unterscheidet von Copolymer ($i_o$), wobei die $MFR_2$ der Komponenten ($i_o$) und ($i_a$) kombiniert zwischen 30 und 80 g/10 min liegt und wobei das $MFR_2$-Verhältnis von ($i_a$ + $i_o$)/($i_o$) im Bereich von 0,5 bis 2,5 liegt; und
(ii) 30 bis 70 Gew.-% eines Copolymers aus Ethylen und mindestens einem C4-C12-Comonomer, wobei das Copolymer sich von Copolymer ($i_o$) und (i) unterscheidet;
wobei die $MFR_2$ des Terpolymers zwischen 1,5 und 10 g/10 min liegt, und wobei die Dichte des Terpolymers zwischen 905 und 940 kg/m³ liegt; und
wobei die $MFR_2$ gemäß ISO 1133 (190 °C, 2,16 kg Belastung) bestimmt wird.

**6.** Ethylen-Terpolymer nach Anspruch 5, das ein Verhältnis von Mz+1/Mw von mindestens 3,0, beispielsweise im Bereich von 3,0-4,5 aufweist; und/oder das die Gleichung Mz(max)/Mz(>90 °C) > 1,5 erfüllt.

**7.** Ethylen-Terpolymer nach den Ansprüchen 5 bis 6, das ein Mz/Mw-Verhältnis von mindestens 2,0, beispielsweise im Bereich von 2,0 bis 4,0, bevorzugt im Bereich von 2,0 bis 3,8, aufweist.

**8.** Ethylen-Terpolymer nach Anspruch 5 bis 7, das eine Dichte im Bereich von 910-930 kg/m³ aufweist.

**9.** Ethylen-Terpolymer nach Anspruch 5 bis 8, das eine MFR2 von 1,5-8,0 g/10 min, bevorzugt 2,0-6,0 g/10 min, aufweist.

**10.** Ethylen-Terpolymer nach Anspruch 5 bis 9, das eine FRR (MFR21/MFR2) von gleich oder größer als 20,0 aufweist.

**11.** Ethylen-Terpolymer nach Anspruch 5 bis 10, wobei die Komponente (i) eine Dichte im Bereich von 920-960 kg/m$^3$, bevorzugt 930-950 kg/m$^3$; und/oder eine $MFR_2$ im Bereich von 40-80 g/10 min aufweist.

**12.** Ethylen-Terpolymer nach Anspruch 5 bis 11, wobei das Terpolymer 30-50 Gew.-% der Komponente (i) und 50-70 Gew.-% der Komponente (ii) umfasst.

**13.** Ethylen-Terpolymer nach Anspruch 5 bis 12, wobei die Komponente (i$_o$) ein Copolymer aus Ethylen und 1-Buten ist;

die Komponente (i$_o$) ein Copolymer aus Ethylen und 1-Buten ist; und/oder
die Komponente (ii) ein Copolymer aus Ethylen und 1-Hexen ist.

**14.** Artikel, umfassend ein Ethylen-Terpolymer nach einem der Ansprüche 5 bis 13, bevorzugt eine Folie.

**Revendications**

**1.** Procédé de préparation d'un terpolymère d'éthylène multimodal comprenant les étapes suivantes :

(a) la pré-polymérisation d'éthylène et d'au moins un comonomère en C4-C12 pour produire un composant copolymère (i$_o$) présentant un $MFR_2$ dans la plage de 30 à 80 g/10 min ;
(b) en présence du composant (i$_o$), la copolymérisation d'éthylène avec un comonomère en C4-C12 pour produire le composant (i) dans lequel le $MFR_2$ du composant (i) est dans la plage de 30 à 80 g/10 min ;
(c) en présence du composant (i), la polymérisation d'éthylène et d'au moins un comonomère en C4-C12 pour produire le composant (ii) ;
dans lequel de l'hydrogène est alimenté pendant une ou plusieurs des étapes de polymérisation ;
dans lequel le rapport $MFR_2$ de (i)/(i$_o$) est dans la plage de 0,5 à 2,5 ;
dans lequel le $MFR_2$ du terpolymère est de 1,5 à 10 g/10 min, et
dans lequel la densité du terpolymère est de 905 à 940 kg/m$^3$ ;
dans lequel le composant (i$_o$) forme 0,5 à 5,0 % en poids du terpolymère,
le composant (i) (qui incorpore le composant io) forme 30 à 70 % en poids du terpolymère et
le composant (ii) forme 30 à 70 % en poids du terpolymère ; et
dans lequel $MFR_2$ est déterminé selon la norme ISO 1133 (190 °C, 2,16 kg de charge).

**2.** Procédé tel que revendiqué dans la revendication 1, dans lequel l'étape c) est mise en oeuvre en l'absence de TEAL.

**3.** Procédé tel que revendiqué dans la revendication 1 ou la revendication 2, dans lequel la polymérisation dans les étapes (a) à (c) est effectuée en présence d'un même catalyseur à site unique.

**4.** Procédé selon l'une quelconque des revendications précédentes dans lequel les étapes (a) et (b) sont réalisées dans un réacteur à boucle et l'étape (c) dans un réacteur à phase gazeuse.

**5.** Terpolymère d'éthylène multimodal, comprenant :

(i$_o$) 0,5-5,0 % en poids d'un copolymère d'éthylène et d'au moins un comonomère en C4-C12 présentant un $MFR_2$ de 30 à 80 g/10 min ;
(i$_a$) 25-69,5 % en poids d'un copolymère d'éthylène et d'au moins un comonomère en C4-C12 dont le copolymère est différent du copolymère (i$_o$) dans lequel le $MFR_2$ des composants (i$_o$) et (i$_a$) combiné est de 30 à 80 g/10 min et dans lequel le rapport $MFR_2$ de (i$_a$ + i$_o$)/(i$_o$) est dans la plage de 0,5 à 2,5 ; et
(ii) 30-70 % en poids d'un copolymère d'éthylène et d'au moins un comonomère en C4-C12 dont le copolymère est différent du copolymère (i$_o$) et (i) ;
dans lequel le $MFR_2$ du terpolymère est de 1,5 à 10 g/10 min, et dans lequel la densité du terpolymère est de 905 à 940 kg/m$^3$ ; et
dans lequel $MFR_2$ est déterminé selon la norme ISO 1133 (190 °C, 2,16 kg de charge).

**6.** Terpolymère d'éthylène tel que revendiqué dans la revendication 5 présentant un rapport de Mz+1/Mw d'au moins 3,0 tel que dans la plage de 3,0-4,5 ; et/ou satisfaisant à l'équation

$$Mz(max) \,/\, Mz(>90\ °C) > 1{,}5.$$

**7.** Terpolymère d'éthylène tel que revendiqué dans les revendications 5 et 6 présentant un Mz/Mw d'au moins 2,0 tel que dans la plage de 2,0 à 4,0, plus préférentiellement dans la plage de 2,0-3,8.

**8.** Terpolymère d'éthylène tel que revendiqué dans les revendications 5 à 7, présentant une densité dans la plage de 910-930 kg/m$^3$.

**9.** Terpolymère d'éthylène tel que revendiqué dans les revendications 5 à 8 présentant un MFR$_2$ de 1,5 à 8,0 g/10 min, de préférence 2,0 à 6,0 g/10 min.

**10.** Terpolymère d'éthylène tel que revendiqué dans les revendications 5 à 9 présentant un FRR (MFR21/MFR2) égal ou supérieur à 20,0.

**11.** Terpolymère d'éthylène tel que revendiqué dans les revendications 5 à 10, dans lequel le composant (i) présente une densité dans la plage de 920-960 kg/m$^3$, de préférence de 930-950 kg/m$^3$ ; et/ou un MFR$_2$ dans la plage de 40-80 g/10 min.

**12.** Terpolymère d'éthylène tel que revendiqué dans les revendications 5 à 11 dans lequel ledit terpolymère comprend 30 à 50 % en poids du composant (i) et 50-70 % en poids du composant (ii).

**13.** Terpolymère d'éthylène tel que revendiqué dans les revendications 5 à 12, dans lequel le composant (i$_o$) est un copolymère d'éthylène et de 1-butène ;

le composant (i$_a$) est un copolymère d'éthylène et de 1-butène ; et/ou
le composant (ii) est un copolymère d'éthylène et de 1-hexène.

**14.** Article comprenant un terpolymère d'éthylène tel que revendiqué dans l'une quelconque des revendications 5 à 13, de préférence un film.

**Figure 1**: Molecular weight averages (Mw, Mz, and Mz+1) for inventive examples 1 and 4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2016083208 A
- WO 2016083209 A
- EP 3015502 A
- US 4582816 A
- US 3405109 A
- US 3324093 A
- EP 479186 A
- US 5391654 A
- EP 1310295 A
- EP 1591460 A
- WO 2007025640 A
- US 4543399 A
- EP 699213 A
- WO 9425495 A
- EP 696293 A
- EP 1415999 A
- WO 0026258 A
- EP 887379 A
- EP 887380 A
- EP 887381 A
- EP 991684 A
- WO 0029452 A
- US 4621952 A
- EP 188125 A
- EP 250169 A
- EP 579426 A
- WO 9535323 A
- WO 0155230 A
- WO 2004000933 A
- EP 810235 A
- WO 9951646 A
- WO 9512622 A
- WO 9632423 A
- WO 9728170 A
- WO 9832776 A
- WO 9961489 A
- WO 03010208 A
- WO 03051934 A
- WO 03051514 A
- WO 2004085499 A
- EP 1752462 A
- EP 1739103 A

**Non-patent literature cited in the description**

- **ORTIN**. *Macromol. Symp.*, 2007, vol. 257, 13-28
- *CHEMICAL ABSTRACTS*, 32509-66-3
- **HE, Y.** ; **QIU, X** ; **ZHOU, Z.** *Mag. Res. Chem.*, 2010, vol. 48, 537-542
- **BUSICO, V.** *Macromolecules*, 2005, vol. 38 (16), 6988-6996
- **ORTIN A.** ; **MONRABAL B.** ; **SANCHO-TELLO J.** *Macromol. Symp.*, 2007, vol. 257, 13-28
- *CHEMICAL ABSTRACTS*, 151840-68-5